# EUROPÄISCHE PATENTSCHRIFT

(11) **EP 0 969 219 B1**
(45) Veröffentlichungstag und Bekanntmachung des Hinweises auf die Patenterteilung: **14.06.2006**
(21) Anmeldenummer: 99112517.0
(22) Anmeldetag: 01.07.1999
(51) Int. Cl.: F16D 13/64, F16D 13/74

(54) **Kupplungsscheibe**
Clutch disc
Disque d'embrayage

(30) Priorität: 04.07.1998 DE 19830049
(43) Veröffentlichungstag der Anmeldung: 05.01.2000
(73) Patentinhaber: Borg-Warner Automotive GmbH, D-69123 Heidelberg (DE)
(72) Erfinder: Bastel, Nobert, 68794 Oberhausen-Rheinhausen (DE); Kroll, Jürgen, Dr., 68775 Ketsch (DE)
(74) Vertreter: Patentanwälte Westphal, Mussgnug & Partner

(56) Entgegenhaltungen:
- DE-A- 19 500 814
- DE-C- 4 432 624
- GB-A- 2 316 153
- US-A- 3 534 842
- US-A- 5 566 802

## Beschreibung

Die Erfindung betrifft eine Kupplungsscheibe für eine naß laufende Reibungskupplung mit einem Träger und mit einem darauf aufgebrachten ringförmigen Reibbelag, in dem wenigstens ein Kanal für die Ölführung ausgebildet ist, der sich von dem Außenrand an den Innenrand des Reibbelags erstreckt.

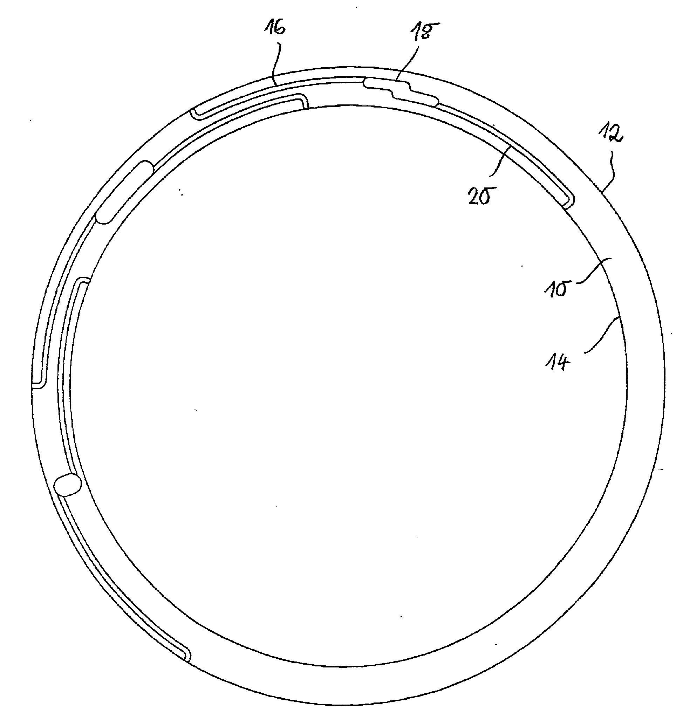

Eine derartige Kupplungsscheibe für eine Kraftfahrzeugkupplung ist aus der US 5 566 802 A bekannt. Sie hat in den Reibbelag eingeprägte (Figur 11) oder ausgestanzte (Sp. 7, Z.67) Nuten für die Ölführung.

Das durch die Nuten hindurchtretende Öl dient zur Kühlung der Kupplungsscheibe. Für eine gute Kühlung darf der Volumenstrom des Öls nicht zu gering und die Verweilzeit des Öls in den Nuten nicht zu kurz sein. Angestrebt werden daher tiefe, lange Nuten. Die Nuttiefe beträgt bis zu 50 % der Reibbelagdicke. Derartige Nuten können nicht beim Verleimen und Pressen im Zuge der Herstellung des Reibbelags geprägt werden. Vielmehr bedarf es eines besonderen Prägearbeitsgangs.

Aufgabe der Erfindung ist es, eine Kupplungsscheibe der eingangs genannten Art zu schaffen, die einfach in der Herstellung und sehr gut ölgekühlt ist.

Diese Aufgabe wird mit einer derartigen Kupplungsscheibe dadurch gelöst, daß der Kanal für die Ölführung einen in den Reibbelag eingeformten Öleintrittsabschnitt, einen aus dem Reibbelag ausgenommenen Mittelabschnitt und einen in den Reibbelag eingeformten Ölaustrittsabschnitt hat.

Der in den Reibbelag eingeformte Öleintrittsabschnitt und Ölaustrittsabschnitt nimmt nur einen Teil der Reibbelagdicke ein. Vorzugsweise sind Öleintrittsabschnitt und Ölaustrittsabschnitt in den Reibbelag eingeprägt. Der Kanalmittelabschnitt ist hingegen so tief, wie der Reibbelag dick ist. Vorzugsweise ist der Mittelabschnitt aus dem Reibbelag ausgestanzt.

Der Träger der Kupplungsscheibe kann sowohl mit einem einseitig darauf aufgebrachten Reibbelag, als auch mit beidseitig darauf aufgebrachten Reibbelägen versehen sein. Letztere Variante ist eine Kupplungslamelle.

Der Kanalmittelabschnitt bildet ein großes Ölreservoir, das eine lange Verweilzeit des Öls darin gewährleistet. Durch den direkten Kontakt des Öls mit dem üblicherweise metallischen Träger wird eine sehr effektive Kühlung erreicht. Öleintrittsabschnitt und Ölaustrittsabschnitt können vergleichsweise flach und kurz ausfallen. Es ist daher möglich, diese Abschnitte beim Verleimen und Pressen im Zuge der Herstellung des Reibbelags zu prägen. Der herkömmlicherweise erforderliche besondere Prägearbeitsgang für die Ölnuten entfällt.

Die erfindungsgemäße Kupplungsscheibe hat eine bevorzugte Verwendung für Kraftfahrzeugkupplungen mit hoher Reibleistung. Exemplarisch erwähnt sei eine auf Dauerschlupfbetrieb ausgelegte Wandlerüberbrückungskupplung, die bei überbrücktem Wandler durch ihren Schlupf die Funktion eines Schwingungsdämpfers zwischen Motorwelle und Getriebeeingangswelle erfüllt. Auch kommt eine Anfahrkupplung in Betracht, die auf längeren Schlupfbetrieb mit hoher Drehmomentübertragung ausgelegt ist.

Die Erfindung wird im folgenden anhand eines in der Zeichnung dargestellten Ausführungsbeispiels näher erläutert. Gezeigt ist in Draufsicht der Reibbelag einer Kupplungsscheibe mit Kanälen für die Ölführung in mehreren Varianten.

Der Reibbelag 10 ist ein Kreisring aus papierartigem Flachmaterial. Er hat Kanäle für die Ölführung, die sich über etwas weniger als den Umfang eines Quadranten von dem Außenrand 12 an den Innenrand 14 des Reibbelags 10 erstrecken.

Die Kanäle haben einen Öleintrittsabschnitt 16, einen Mittelabschnitt 18 und einen Ölaustrittsabschnitt 20. Öleintrittsabschnitt 16 und Ölaustrittsabschnitt 20 sind in den Reibbelag 10 eingeprägt. Der Kanalmittelabschnitt 18 ist aus dem Reibbelag 10 ausgestanzt.

Der Öleintrittsabschnitt 16 ist eine schmale Nut rechteckigen Profils. Er beginnt am Außenrand 12 des Reibbelags 10 mit einer radialen Eintrittsöffnung und anschließenden 90°-Krümmung. Der Öleintrittsabschnitt 16 erstreckt sich in Umfangsrichtung nahe dem Außenrand 12 des Reibbelags, bis er den Kanalmittelabschnitt 18 trifft.

Der Kanalmittelabschnitt 18 ist ein Langloch, das sich in der radialen Mitte des Reibbelags 10 befindet. Form und Größe des Langlochs können variieren.

Zum einen ist ein kurzes, in radialer Richtung sich erstreckendes Langloch gezeigt.

Zum anderen ist ein langes, in Umfangsrichtung sich ersteckendes Langloch gezeigt.

Zum dritten ist ein radial abgestuftes Langloch mit einer radial außen in Umfangsrichtung sich erstreckenden Außenpartie und mit einer radial innen in Umfangsrichtung sich erstreckenden Innenpartie gezeigt, deren Außenränder und Innenränder an in Umfangsrichtung versetzten Stufen ineinander übergehen.

Der Öleintrittsabschnitt 16 mündet radial außen an dem einen gerundeten Ende des Langlochs. Der Ölaustrittsabschnitt geht radial innen von dem anderen gerundeten Ende des Langlochs ab.

Der Ölaustrittsabschnitt 20 ist eine schmale Nut rechteckigen Profils. Er erstreckt sich in Umfangsrichtung nahe dem Innenrand 14 des Reibbelags, und er läuft mit einer 90°-Krümmung radial zum Innenrand 14 aus.

Der Öleintrittsabschnitt 16 eines Kanals kann sich mit dem Ölaustrittsabschnitt 20 eines benachbarten Kanals auf dem Umfang des Reibbelags 10 überlappen, und umgekehrt.

### Liste der Bezugszeichen

- 10: Reibbelag
- 12: Außenrand
- 14: Innenrand
- 16: Öleintrittsabschnitt
- 18: Mittelabschnitt
- 20: Ölaustrittsabschnitt

## Patentansprüche

1. Kupplungsscheibe für eine naß laufende Reibungskupplung mit einem Träger und mit einem darauf aufgebrachten ringförmigen Reibbelag (10), in dem wenigstens ein Kanal für die Ölführung ausgebildet ist, der sich von dem Außenrand (12) an den Innenrand (14) des Reibbelags erstreckt, **dadurch gekennzeichnet, daß** der Kanal einen in den Reibbelag (10) eingeformten Öleintrittsabschnitt (16), einen aus dem Reibbelag (10) ausgenommenen Mittelabschnitt (18) und einen in den Reibbelag eingeformten Ölaustrittsabschnitt (20) hat.

2. Kupplungsscheibe nach Anspruch 1, **dadurch gekennzeichnet, daß** der Öleintrittsabschnitt (16) und der Ölaustrittsabschnitt (20) in den Reibbelag (10) eingeprägt sind.

3. Kupplungsscheibe nach Anspruch 1 oder 2, **dadurch gekennzeichnet, daß** der Mittelabschnitt (18) aus dem Reibbelag (10) ausgestanzt ist.

4. Kupplungsscheibe nach einem der Ansprüche 1 bis 3, **gekennzeichnet durch** einen Träger mit einem einseitig darauf aufgebrachten Reibbelag (10).

5. Kupplungsscheibe nach einem der Ansprüche 1 bis 3, **gekennzeichnet durch** einen Träger mit beidseitig darauf aufgebrachten Reibbelägen (10).

6. Verfahren zur Herstellung einer Kupplungsscheibe nach einem der Ansprüche 1 bis 5, **dadurch gekennzeichnet, daß** der Öleintrittsabschnitt (16) und der Ölaustrittsabschnitt (20) beim Verleimen und Pressen des Reibbelags in einem Arbeitsgang geprägt werden.

7. Verwendung einer Kupplungsscheibe nach einem der Ansprüche 1 bis 5 für eine Kraftfahrzeugkupplung, insbesondere Wandlerüberbrückungskupplung oder Anfahrkupplung.

## Claims

1. Clutch disc for a wet-running friction clutch having a support and an annular friction lining (10) which is applied to it and in which at least one channel for the oil guidance is formed, the channel extending from the outer edge (12) to the inner edge (14) of the friction lining, **characterised in that** the channel has an oil inlet section (16) formed in the friction lining (10), a middle section (18) removed from the friction lining (10) and an oil outlet section (20) formed in the friction lining.

2. Clutch disc according to Claim 1, **characterised in that** the oil inlet section (16) and the oil outlet section (20) are pressed into the friction lining (10).

3. Clutch disc according to Claim 1 or 2, **characterised in that** the middle section (18) is punched out of the friction lining (10).

4. Clutch disc according to one of Claims 1 to 3, **characterised by** a support with a friction lining (10) applied to it on one side.

5. Clutch disc according to one of Claims 1 to 3, **characterised by** a support with friction linings (10) applied to it on both sides.

6. Method for producing a clutch disc according to one of Claims 1 to 5, **characterised in that** the oil inlet section (16) and the oil outlet section (20) are pressed in during the bonding and pressing of the friction lining, in a single operation.

7. Use of a clutch disc according to one of Claims 1 to 5 for a motor vehicle clutch, in particular converter lockup clutch or starting clutch.

## Revendications

1. Disque d'embrayage pour un embrayage à friction à fonctionnement humide avec un support et une garniture de friction (10) à forme annulaire appliquée sur celui-ci, dans laquelle est réalisé pour le guidage de l'huile au moins un canal, qui s'étend du bord extérieur (12) au bord intérieur (14) de la garniture de friction, **caractérisé en ce que** le canal présente un tronçon d'entrée d'huile (16) creusé dans la garniture de friction (10), un tronçon médian (18) extrait de la garniture de friction (10), et un tronçon de sortie d'huile (20) creusé dans la garniture de friction.

2. Disque d'embrayage selon la revendication 1, **caractérisé en ce que** le tronçon d'entrée d'huile (16) et le tronçon de sortie d'huile (20) sont produit par façonnage dans la garniture de friction (10).

3. Disque d'embrayage selon la revendication 1 ou 2, **caractérisé en ce que** le tronçon médian (18) est découpé par estampage à partir de la garniture de friction (10).

4. Disque d'embrayage selon l'une des revendications 1 à 3, **caractérisé par** un support ayant une garniture de friction (10) appliquée sur une face de celui-ci.

5. Disque d'embrayage selon l'une des revendications 1 à 3, **caractérisé par** un support ayant des garnitures de friction (10) appliquées sur les deux faces de celui-ci.

6. Procédé de fabrication d'un disque d'embrayage selon l'une des revendications 1 à 5, **caractérisé en ce que** le tronçon d'entrée d'huile (16) et le tronçon de sortie d'huile (20) sont façonnés en une seule passe opératoire, lors du collage et du pressage de la garniture de friction.

7. Utilisation d'un disque d'embrayage selon l'une des revendications 1 à 5 pour un embrayage pour véhicules automobiles, en particulier un embrayage de pontage de convertisseur ou un embrayage de démarrage.
